Europäisches Patentamt

European Patent Office

Office européen des brevets

(11) Veröffentlichungsnummer: **0 530 687 A1**

# EUROPÄISCHE PATENTANMELDUNG

(21) Anmeldenummer: **92114680.9**

(22) Anmeldetag: **28.08.92**

(51) Int. Cl.⁵: **E01C 11/24**, E01C 7/18, C08L 95/00

(30) Priorität: **06.09.91 DE 4129621**

(43) Veröffentlichungstag der Anmeldung:
**10.03.93 Patentblatt 93/10**

(84) Benannte Vertragsstaaten:
**PT**

(71) Anmelder: **Chemische Fabrik Grünau GmbH
Robert-Hansen-Strasse 1
W-7918 Illertissen(DE)**
Anmelder: **MANNESMANN Aktiengesellschaft
Mannesmannufer 2
W-4000 Düsseldorf 1(DE)**

(72) Erfinder: **Annemaier, Dieter, Dr.
Hauffstrasse 15
W-7901 Illerkirchberg 2(DE)**
Erfinder: **Keipl, Stefan
Schönebergstrasse 26
W-7919 Bellenberg(DE)**
Erfinder: **Kämereit, Wilhelm
Bingener Weg 7
W-4000 Düsseldorf 1(DE)**
Erfinder: **Schmitt, Oskar, Prof.
Zur Fernsicht 21
W-5190 Stolberg-Zweifall(DE)**

(74) Vertreter: **Wilk, Hans Christof, Dr.
c/o Henkel KGaA TFP / Patentabteilung
Postfach 10 11 00
W-4000 Düsseldorf 1 (DE)**

(54) **Pulverförmiger hydrophober Füller für bitumengebundene Verkehrsflächen.**

(57) Die Erfindung betrifft einen pulverförmigen hydrophoben Füller für bitumengebundene Verkehrsflächen auf Basis mindestens einer den Gefrierpunkt von Wasser erniedrigenden Substanz.

EP 0 530 687 A1

Die Erfindung betrifft einen pulverförmigen hydrophoben Füller für bitumengebundene Verkehrsflächen auf Basis mindestens einer den Gefrierpunkt von Wasser erniedrigenden Substanz.

Es ist bekannt, zur Verhinderung von Eisglätte - insbesondere bei um 0°C schwankenden Umgebungstemperaturen - und zur Erleichterung der Schneeräumung Straßenbeläge herzustellen, die bereits den Gefrierpunkt von Wasser erniedrigende Substanzen enthalten. So wird beispielsweise in DE-OS 24 26 200 ein bituminöses bzw. asphalthaltiges Mittel zur Herstellung eines Eisbildungen hemmenden und Schnee auftauenden Straßenbelages beschrieben, das durch eine wasserdichte Umhüllung aus einem trocknenden Öl oder aus einem Kunststoff aus der Gruppe Polyvinylacetat, Polyvinylalkohol, Epoxidharz oder Acrylharz geschützte, in das Mineralstoffgerüst eingelagerte Erdalkalimetallhalogenid-und Alkalimetallhydroxidteilchen enthält. Die auftauende Wirkung dieser Teilchen, die eine Teilchengröße bis zu 7 mm haben, wird nach der Zerstörung der Öl- bzw. Kunststoffumhüllung durch den üblichen Abrieb des Straßenbelages durch den Verkehr hervorgerufen. Ein derartiges Mittel hat jedoch den großen Nachteil, daß sich die verhältnismäßig großen Teilchen nur schwer in den anderen Bestandteilen des Straßenbelages homogen verteilen lassen, und daß keine über die gesamte Oberfläche des Straßenbelages gleichmäßige auftauende Wirkung erzielt wird. Darüber hinaus können durch die Herauslösung dieser großen Teilchen reparaturbedürftige Löcher im Straßenbelag entstehen.

In der europäischen Patentschrift EP 153 269 ist die Verwendung eines Feinkorngemisches mit einer Körnung unterhalb von 0,2 mm für Straßendecken beschrieben, das neben Natriumchlorid als hydrophobierende Komponente Polyurethan, Perlit und ggf. Ruß enthält. In dem Feinkorngemisch liegt der Anteil der hydrophobierenden Komponente zwischen 5 und 75 Gew.-% des Anteils der hydrophilen Komponenten.

Es besteht der Wunsch, den Anteil an Füller auf Basis einer den Gefrierpunkt des Wassers erniedrigenden Substanz in einer Asphaltmischung relativ niedrig zu halten, da einerseits häufig Mindestmengen andersartiger, nicht den Gefrierpunkt des Wassers erniedrigender Füller, beispielsweise Gesteinsmehl, gefordert werden, andererseits aber die zulässige Gesamtmenge an Füller durch die jeweilige technische Spezifikation begrenzt ist. Daher ist man an möglichst hochwirksamen Füllern auf Basis einer den Gefrierpunkt des Wassers erniedrigenden Substanz interessiert. Das bedeutet, daß der Mengenanteil an den Gefrierpunkt des Wassers erniedrigenden Substanzen in derartigen Füllern möglichst hoch sein soll. Je höher der Anteil der den Gefrierpunkt des Wassers erniedrigenden Substanzen (hydrophile Substanzen) ist, um so geringer ist damit der verfügbare Anteil für Substanzen, die die hydrophilen Substanzen hydrophobieren. Für die unbedingt erforderliche Langzeitwirksamkeit eines in einer Verkehrsfläche eingebauten Füllers muß jedoch eine vorzeitige Auslaugung der den Gefrierpunkt des Wassers erniedrigenden Substanzen vermieden werden, d.h. es muß eine möglichst niedrige Extraktionsgeschwindigkeit durch eine besonders gute Hydrophobierung gewährleistet sein. Ferner sollen derartige Füller auch noch bei Temperaturen oberhalb von 250°C beständig sein, damit sie beispielsweise in Gußasphalt problemlos eingearbeitet werden können.

Die der Erfindung zugrunde liegende Aufgabe bestand somit in der Entwicklung eines Füllers für bitumengebundene Verkehrsflächen, mit dem bei möglichst geringer Einsatzmenge ein gegenüber bekannten Füllern auch langfristig deutlich wirksamerer Überfrierungsschutz bitumengebundener Verkehrsflächen erzielt wird.

Es wurde gefunden, daß die an einen solchen Füller gestellten hohen Anforderungen von einem pulverförmigen Füller auf Basis mindestens einer den Gefrierpunkt des Wassers erniedrigenden Substanz, der hydrophobierte amorphe Siliciumdioxide in Mengen zwischen 0,1 und 10 Gew.-% enthält, erfüllt werden.

Gegenstand der Erfindung ist dementsprechend ein pulverförmiger hydrophober Füller für bitumengebundene Verkehrsflächen auf Basis einer oder mehrerer den Gefrierpunkt des Wassers erniedrigenden Substanzen, wobei der Durchmesser der Füllerteilchen zwischen größer 0 und 200 μm liegt, welcher dadurch gekennzeichnet ist, daß der Füller

| | |
|---|---|
| 60 - 95 Gew.-% | einer oder mehrerer den Gefrierpunkt des Wassers erniedrigenden Substanzen |
| 0 - 39,9 Gew.-% | Gesteinsmehl und |
| 0,1 - 10 Gew.-% | eines oder mehrerer hydrophobierter amorpher Siliciumdioxide |

enthält.

Ein bevorzugter Füller enthält

| 60 - 95 Gew.-% | einer oder mehrerer den Gefrierpunkt des Wassers erniedrigenden Substanzen |
| 0 - 39,5 Gew.-% | Gesteinsmehl und |
| 0,5 - 5 Gew.-% | eines oder mehrerer hydrophobierter, amorpher Siliciumdioxide. |

Besonders bevorzugt wird ein Füller, der

| 80 - 95 Gew. -% | einer oder mehrerer den Gefrierpunkt des Wassers erniedrigenden Substanzen |
| 0 - 19,5 Gew.-% | Gesteinsmehl und |
| 0,5 - 5 Gew.-% | eines oder mehrerer hydrophobierter, amorpher Siliciumdioxide |

enthält.

Mit einem erfindungsgemäßen Füller, der bis zu 95 Gew.-% einer oder mehrerer den Gefrierpunkt des Wassers erniedrigenden Substanzen enthalten kann, lassen sich bitumengebundene Verkehrsflächen, insbesondere Straßendecken und Start- und Landebahnen von Flughäfen, deutlich besser gegen Vereisung und Ausbildung von Rauhreif schützen. Darüber hinaus wird durch einen erfindungsgemäßen Füller im Vergleich zu einem bekannten Füller mit dem gleichen Gehalt an den Gefrierpunkt des Wassers erniedrigenden Substanzen die Extraktionsgeschwindigkeit der den Gefrierpunkt des Wassers erniedrigenden Substanz deutlich reduziert, wodurch der Überfrierungsschutz von Verkehrsflächen verlängert wird.

Als den Gefrierpunkt von Wasser erniedrigende Substanzen eignen sich insbesondere Chloride und/oder Sulfate von Alkalimetallen und/oder Erdalkalimetallen und/oder Harnstoff. Besonders bevorzugt werden Chloride von Alkalimetallen. Beispiele geeigneter Chloride und/oder Sulfate sind Natrium-, Kalium-, Magnesium- und/oder Calciumchlorid und/oder Natrium-, Kalium- und/oder Magnesiumsulfat.

Als hydrophobierte amorphe Siliciumdioxide eignen sich hydrophobierte amorphe, aus wäßriger Lösung gefällte Siliciumdioxide und hydrophobierte, amorphe, pyrogene Siliciumdioxide. Bevorzugt werden hydrophobierte, amorphe, aus wäßriger Lösung gefällte Siliciumdioxide. Die hydrophobierten Siliciumdioxide besitzen eine Primärteilchengröße vorzugsweise zwischen 5 und 100 nm, besonders bevorzugt zwischen 8 und 30 nm, und eine spezifische Oberfläche nach der BET-Methode bestimmt, vorzugsweise zwischen 50 und 300 $m^2$/g, besonders bevorzugt zwischen 50 und 200 $m^2$/g.

Zur Herstellung eines erfindungsgemäßen Füllers werden zunächst die den Gefrierpunkt des Wassers erniedrigenden Substanzen gemahlen, so daß bis zu 15 Gew.-% der Teilchen einen Durchmesser > 90 $\mu$m besitzen. Danach werden die gemahlenen, den Gefrierpunkt des Wassers erniedrigenden Substanzen mit einem oder mehreren hydrophobierten, amorphen Siliciumdioxiden und ggf. Gesteinsmehl homogen vermischt. Als Gesteinsmehl eignet sich beispielsweise Kalksteinmehl, Marmormehl, Lavamehl, Basaltmehl, Quarzmehl und/oder Schiefermehl. Kalksteinmehl wird als Gesteinsmehl bevorzugt. In einem erfindungsgemäßen Füller liegt der durch Absiebung im Luftstrahlsieb bestimmte Anteil der Teilchen mit einem Durchmesser oberhalb von 90 $\mu$m vorzugsweise zwischen 5 und 20 Gew.-%, besonders bevorzugt zwischen 10 und 15 Gew.-%.

Ein erfindungsgemäßer Füller wird in an sich bekannter Weise mit Sand, Splitt, Gesteinsmehl sowie Bitumen zu Walzasphalt oder anderen bitumenhaltigen Gemischen, wie Gußasphalt oder Gemischen zur Behandlung, beispielsweise zur Ausbesserung von Straßenoberflächen, verarbeitet. Der Füllergehalt liegt in Walzasphalt bei maximal 14 Gew.-%, in anderen bitumenhaltigen Gemischen bei maximal 30 Gew.-%.

Ein erfindungsgemäßer Füller läßt sich aufgrund seiner Teilchengröße sowie seiner Temperaturbeständigkeit bis 280°C genauso wie ein Gesteinsmehlfüller homogen in bitumenhaltigen Gemischen, beispielsweise Gußasphalt verteilen. Ferner ist ein erfindungsgemäßer Füller bei Temperaturen zwischen - 20°C und + 60°C sowie hohen Auflagedrücken lagerbeständig, besitzt eine hohe Fließfähigkeit, ist rüttelbeständig und wird beispielsweise während der pneumatischen Förderung nicht entmischt.

**Beispiele**

**Herstellung von pulverförmigen Füllern für bitumengebundene Verkehrsflächen**

Die Teilchengrößen der Füller, des Kochsalzes, das Lavamehles und des Kalksteinmehles wurden durch Absiebung im Luftstrahlsieb bestimmt.

Herstellungsbeispiel 1

900 g Kochsalz wurden in einer Labormühle so lange gemahlen, bis nur noch 13 Gew.-% der Teilchen einen Durchmesser größer 90 $\mu$m aufwiesen. Danach wurde das Kochsalz mit 80 g Lavamehl (82 Gew. - % der Teilchen hatten einen Durchmesser kleiner 90 $\mu$m) und 20 g Aerosil[R]972 (Degussa AG; pyrogene hydrophobierte Kieselsäure, Primärteilchengröße: 16 nm, spezifische Oberfläche (BET): 110 m$^2$/g) homogen gemischt. 13 Gew.-% der Teilchen in dem erhaltenen Füller hatten einen Durchmesser größer 90 $\mu$m.

Herstellungsbeispiel 2

Unter den in Herstellungsbeispiel 1 angegebenen Bedingungen wurde ein Füller hergestellt, der anstelle von 20 g Aerosil[R]972 20 g Sipernat D 17 (Degussa AG; hydrophobierte, amorphe, gefällte Kieselsäure, Primärteilchengröße: 28 nm, spezifische Oberfläche (BET): 110 m$^2$/g) enthielt. 13,4 Gew.-% der Teilchen in dem erhaltenen Füller hatte einen Durchmesser größer 90 $\mu$m.

Herstellungsbeispiel 3

Unter den in Herstellungsbeispiel 1 genannten Bedingungen wurde ein Füller hergestellt, der anstelle von 20 g Aerosil[R]972 20 g eines mit Methyl-Hydrogen-Polysiloxan und Dioctylzinndilaurat im Gewichtsverhältnis 10 : 1 hydrophobierten, amorphen, pyrogenen Siliciumdioxids (spezifische Oberfläche (BET) 105 m$^2$/g) enthielt. 13 Gew.-% der Teilchen des erhaltenen Füllers hatten einen Durchmesser größer 90 $\mu$m.

Herstellungsbeispiel 4

Unter den in Herstellungsbeispiel 1 genannten Bedingungen wurde ein Füller hergestellt, der anstelle von 20 g Aerosil[R]972 20 g eines mit Methyl-Hydrogen-Polysiloxan und Dioctylzinndilaurat im Gewichtsverhältnis 10 : 1 hydrophobierten, amorphen, gefällten Siliciumdioxids (spezifische Oberfläche (BET): 77 m$^2$/g) enthielt. 11,7 Gew.-% der Teilchen des erhaltenen Füllers hatten einen Durchmesser größer 90 $\mu$m.

Herstellungsbeispiel 5

Unter den in Herstellungsbeispiel 1 angegebenen Bedingungen wurde ein Füller aus 600 g Kochsalz, 380 g Lavamehl und 20 g eines mit Methyl-Hydrogen-Polysiloxan und Dioctylzinndilaurat im Gewichtsverhältnis 10 : 1 hydrophobierten, amorphen, gefällten Siliciumdioxids (spezifische Oberfläche (BET): 77 m$^2$/g) hergestellt. 14,7 Gew.-% der Teilchen des erhaltenen Füllers hatten einen Durchmesser größer 90 $\mu$m.

Herstellungsbeispiel 6

Unter den in Herstellungsbeispiel 5 angegebenen Bedingungen wurde ein Füller hergestellt, der anstelle von 380 g Lavamehl 380 g Kalksteinmehl (82 Gew.-% der Teilchen hatten einen Durchmesser kleiner 90 $\mu$m) enthielt. 14,7 Gew.-% der Teilchen des erhaltenen Füllers hatten einen Durchmesser größer 90 $\mu$m.

Herstellungsbeispiel 7 (Stand der Technik)

600 g Kochsalz wurden in einer Labormühle so lange gemahlen, bis nur noch 15 Gew.-% der Teilchen einen Durchmesser von größer 90 $\mu$m auf-, wiesen. Anschließend wurde das gemahlene Kochsalz mit 280 g Lavamehl (82,8 Gew.-% der Teilchen hatten einen Durchmesser von kleiner 90 $\mu$m), 100 g Polyurethan-Hartschaum (25 Gew.-% der Teilchen hatten einen Durchmesser kleiner 90 $\mu$m) und 20 g Ruß (92,8 Gew.-% der Teilchen hatten einen Durchmesser kleiner 90 $\mu$m) homogen vermischt. 20,6 Gew.-% der Teilchen des erhaltenen Füllers hatten einen Durchmesser von größer 90 $\mu$m.

Herstellungsbeispiel 8 (Kontrolle)

600 g Kochsalz wurden in einer Labormühle so lange gemahlen, bis nur noch 13 Gew.-% der Teilchen einen Durchmesser von größer 90 $\mu$m aufwiesen. Anschließend wurde das Kochsalz mit 400 g Lavamehl (82 Gew.-% der Teilchen hatten einen Durchmesser kleiner 90 $\mu$m) homogen gemischt. 14,1 Gew.-% der Teilchen des erhaltenen Füllers hatten einen Durchmesser von größer 90 $\mu$m.

4

Bestimmung der hydrophoben Eigenschaften der Füller

Die hydrophoben Eigenschaften wurden in Anlehnung an ISO 7202, Ausgabe 01.06.1987 (Fire Protection-Fire Extinguishing Media-Powder, § 12.6) nach 45 Minuten bestimmt. Die Beurteilung "positiv" bedeutet, daß ISO 7202 nach 45 Minuten erfüllt war, die Beurteilung "negativ", daß ISO 7202 nach 45 Minuten nicht erfüllt war. Ferner wurde die Zeit bis zum völligen Verschwinden des Wassertropfens ermittelt. Die Ergebnisse sind in Tabelle 1 zusammengestellt.

Bestimmung der durch Wasser aus Asphalt-Probekörpern (Marschall-Körpern) extrahierten Chloridmenge

Aus

| | |
|---|---|
| 360 g | Basaltsplitt (Korngröße: 8 bis 11 mm) |
| 120 g | Basaltsplitt (Korngröße: 8 bis 5 mm) |
| 180 g | Basaltsplitt (Korngröße: 2 bis 5 mm) |
| 444 g | Basaltbrechsand (Korngröße: 0,09 bis 2 mm) |
| 36 g | Kalksteinmehl (Korngröße: 0 bis 0,09 mm) |
| 60 g | eines erfindungsgemäßen Füllers und |
| 72 g | Bitumen B 80 |

wurde ein Marschall-Körper nach DIN 1996 hergestellt. Der Marschall-Körper wurde in 2 Liter destilliertes Wasser gelegt und in regelmäßigen Zeitabständen das chloridionenhaltige Wasser durch destilliertes Wasser ersetzt. Nach 48 und 192 Stunden wurde der Chloridgehalt der chloridionenhaltigen Wässer durch Fällung von Silberchlorid bestimmt. Je kleiner die extrahierte Chloridmenge war, umso größer war die zu erwartende Dauer des Überfrierungsschutzes der Marschall-Körper. Die Ergebnisse sind in Tabelle 1 zusammengefaßt.

**T a b e l l e  1**

| Füller nach Herstellungs-beispiel | Bestimmung der hydrophoben Eigenschaften Tropfenablauf nach 45 Minuten | völliges Verschwinden des Wassertropfens in Minuten | extrahierte Chloridmenge nach 48 h | | nach 192 h | |
|---|---|---|---|---|---|---|
| | | | in mg | in Gew.-% von der gesamten Chloridmenge | in mg | in Gew.-% von der gesamten Chloridmenge |
| 1 | positiv | 270 | 1210 | 2,2 | 2660 | 4,9 |
| 2 | positiv | 240 | 1150 | 2,1 | 2050 | 3,7 |
| 3 | positiv | 270 | 1350 | 2,5 | 2880 | 5,3 |
| 4 | positiv | 300 | 1220 | 2,2 | 2270 | 4,2 |
| 5 | positiv | 270 | 700 | 1,9 | 1590 | 4,4 |
| 6 | positiv | 270 | 720 | 2,0 | 1300 | 3,6 |
| 7 (Stand der Technik) | negativ | 105 | 1150 | 3,1 | 2200 | 6,1 |
| 8 (Kontrolle) | negativ | 1 | 1310 | 3,6 | 2560 | 7,1 |

**Patentansprüche**

1. Pulverförmiger hydrophober Füller für bitumengebundene Verkehrsflächen auf Basis einer oder mehrerer den Gefrierpunkt des Wassers erniedrigenden Substanzen, wobei der Durchmesser der Füllerteilchen zwischen größer 0 und 200 $\mu$m liegt, dadurch gekennzeichnet, daß der Füller

| 60 - 95 Gew.-% | einer oder mehrerer den Gefrierpunkt des Wassers erniedrigenden Substanzen |
|---|---|
| 0 - 39,9 Gew.-% | Gesteinsmehl und |
| 0,1- 10 Gew.-% | eines oder mehrerer hydrophobierter, amorpher Siliciumdioxide |

enthält.

**2.** Füller nach Anspruch 1, dadurch gekennzeichnet, daß der Füller

| 60 - 95 Gew.-% | einer oder mehrerer den Gefrierpunkt des Wassers erniedrigenden Substanzen |
|---|---|
| 0 - 39,5 Gew.-% | Gesteinsmehl und |
| 0,5 - 5 Gew.-% | eines oder mehrerer hydrophobierter, amorpher Siliciumdioxide |

enthält.

**3.** Füller nach einem oder beiden der Ansprüche 1 bis 2, dadurch gekennzeichnet, daß der Füller

| 80 - 95 Gew.-% | einer oder mehrerer den Gefrierpunkt des Wassers erniedrigenden Substanzen |
|---|---|
| 0 - 19,5 Gew.-% | Gesteinsmehl und |
| 0,5 - 5 Gew.-% | eines oder mehrerer hydrophobierter, amorpher Siliciumdioxide |

enthält.

**4.** Füller nach einem oder mehreren der Ansprüche 1 bis 3, dadurch gekennzeichnet, daß die den Gefrierpunkt des Wassers erniedrigende Substanz ein Chlorid und/oder ein Sulfat eines Alkalimetalls und/oder Erdalkalimetalls und/oder Harnstoff ist.

**5.** Füller nach einem oder mehreren der Ansprüche 1 bis 4, dadurch gekennzeichnet, daß die Siliciumdioxide aus einer wäßrigen Lösung gefällt worden sind.

**6.** Füller nach einem oder mehreren der Ansprüche 1 bis 5, dadurch gekennzeichnet, daß das Gesteinsmehl Kalksteinmehl ist.

Europäisches Patentamt

# EUROPÄISCHER RECHERCHENBERICHT

Nummer der Anmeldung

EP    92 11 4680

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5 ) |
|---|---|---|---|
| A | EP-A-0 332 803 (VABA OEL)<br>* das ganze Dokument *<br>--- | 1,4,6 | E01C11/24<br>E01C7/18<br>C08L95/00 |
| D,A | EP-A-0 153 269 (MANNESMANN)<br>* das ganze Dokument *<br>--- | 1,4 | |
| D,A | DE-A-2 426 200 (PLASTIROUTE)<br>* das ganze Dokument *<br>--- | 1,4 | |
| A | DE-A-2 919 444 (WIBAU)<br><br>----- | | |

| RECHERCHIERTE SACHGEBIETE (Int. Cl.5 ) |
|---|
| E01C<br>C08L |

Der vorliegende Recherchenbericht wurde für alle Patentansprüche erstellt

| Recherchenort | Abschlußdatum der Recherche | Prüfer |
|---|---|---|
| DEN HAAG | 10 DEZEMBER 1992 | DIJKSTRA G. |